# FASCICULE DE BREVET EUROPEEN

(11) **EP 1 795 328 B1**
(45) Date de publication et mention de la délivrance du brevet: **24.02.2010**
(21) Numéro de dépôt: 06291871.9
(22) Date de dépôt: 04.12.2006
(51) Int. Cl.: B29C 49/12, B29C 49/64, B65D 1/02, B29C 49/36

(54) **Procédé et dispositif de moulage par étirage-soufflage de récipients, notamment de bouteilles, en matière thermoplastique à fond pétaloïde**
Verfahren und Vorrichtung zum Formen durch Streckblasen von Behältern, insbesondere Flaschen aus thermoplastischem Material mit blütenblattförmigem Boden
Method and device for moulding containers, particularly bottles, by drawing-blowing thermoplastic material with a petaloid bottom

(30) Priorité: 08.12.2005 FR 0512486
(43) Date de publication de la demande: 13.06.2007
(73) Titulaire: Sidel Participations, 76930 Octeville Sur Mer (FR)
(72) Inventeur: Vieuillot, Philippe c/o Sidel Participations, 76930 Octeville sur Mer (FR)
(74) Mandataire: Gorrée, Jean-Michel

(56) Documents cités:
- EP-A1- 0 029 639
- JP-A- 4 119 819
- JP-A- 9 118 322
- US-A- 5 229 142

## Description

La présente invention concerne d'une façon générale le domaine de la fabrication de récipients, notamment de bouteilles, en matière thermoplastique telle que le PET, et elle concerne plus spécifiquement des perfectionnements apportés aux procédés et dispositifs de moulage pour la fabrication de récipients, notamment de bouteilles, en matière thermoplastique à fond pétaloïde par étirage-soufflage de préformes chaudes dans un moule de soufflage qui possède lui aussi un fond pétaloïde comportant plusieurs dorsales rayonnantes alternant avec des cavités qui sont propres à former, lors du moulage, respectivement les vallées et les pieds du fond pétaloïde des récipients, selon les revendications 1 et. Le document JP-A-041 19 819 décrit un procédé de fabrication de récipients selon le préambule de la revendication 1 et un dispositif de moulage pour la fabrication de récipients selon le préambule de la revendication.

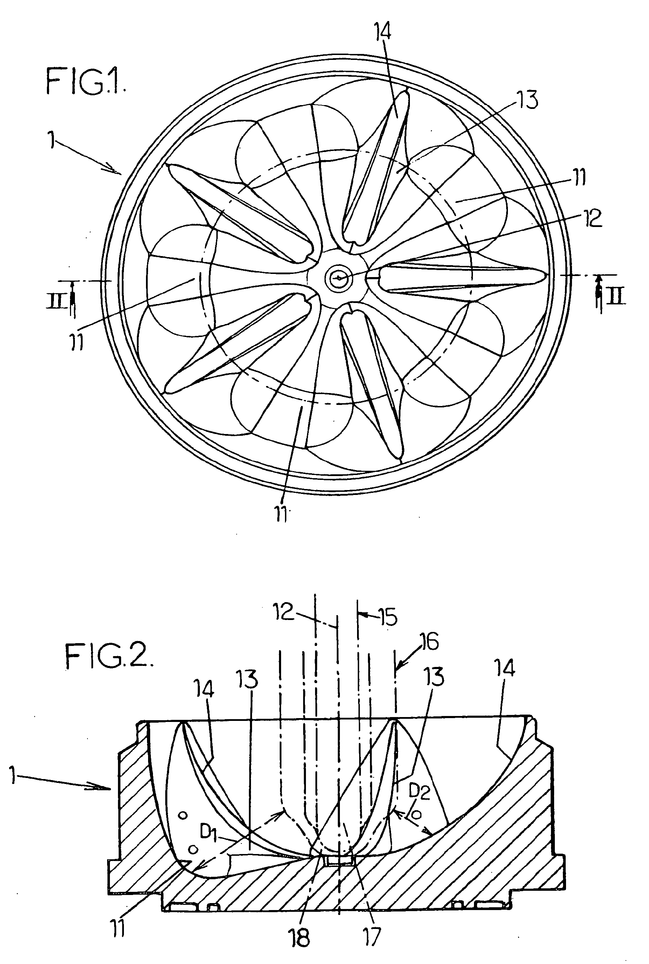

En se reportant aux figures 1 à 3 des dessins annexés, il y est représenté -respectivement en vue de dessus, en coupe diamétrale selon la ligne II-II de la figure 1 et en perspective de trois quarts par le dessus avec arrachement partiel- un fond 1 de moule destiné à équiper un moule (non montré) pour la fabrication, par étirage-soufflage de préformes chaudes, de récipients, notamment de bouteilles, en matière thermoplastique telle que du PET, lequel moule appartient à un dispositif de moulage (non montré) qui peut comporter plusieurs moules, par exemple un dispositif tournant du type carrousel dans lequel les moules sont répartis périphériquement.

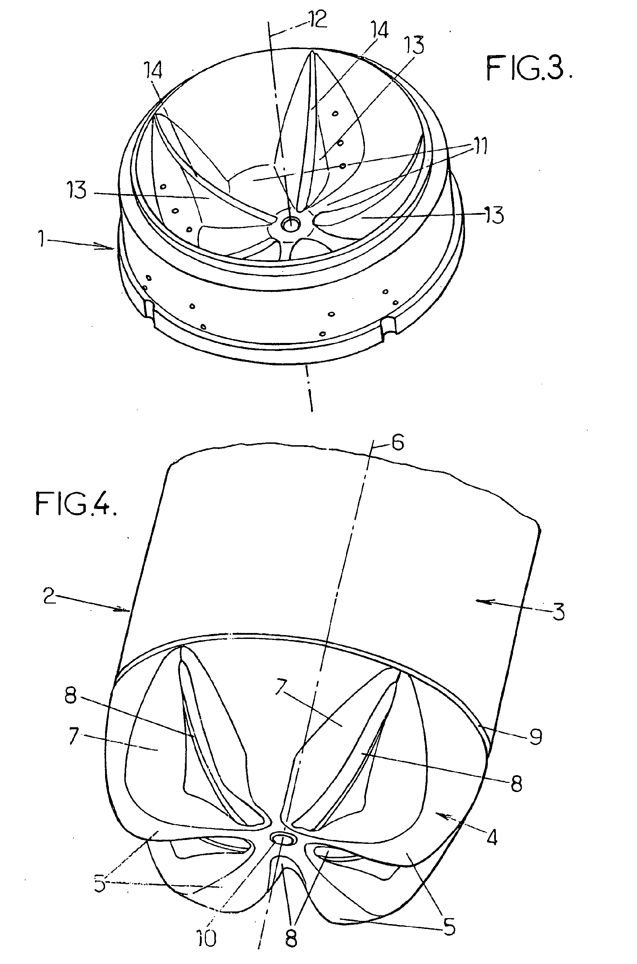

Comme montré sur la figure 4 qui est une vue en perspective isométrique de trois quarts par le dessous du fond d'un récipient 2 moulé à l'aide d'un fond 1 de moule agencé selon les figures 1 à 3, le récipient 2 possède un corps 3 et possède un fond 4 du type dit pétaloïde présentant une pluralité d'excroissances formant pieds 5 en nombre généralement compris entre quatre et six (en général cinq dans la pratique courante, comme illustré). Ces pieds sont distribués angulairement de façon équidistante et s'étendent approximativement parallèlement à l'axe 6 du récipient. Ils sont séparés les uns des autres par des vallées 7 rayonnantes à fond 8 curviligne convexe (lequel peut s'étendre en arc de cercle). Toutes les vallées 7 convergent au centre du fond 4 du récipient qui peut comporter un plateau 10 en légère saillie vers l'extérieur. Le fond 4 du récipient se raccorde au corps 3 du récipient par une zone 9 de raccordement sensiblement cylindrique de révolution.

Le fond 1 de moule est agencé de façon complémentaire et comporte, pour le moulage du susdit fond 4 du récipient 2, des cavités 11 en nombre égal au nombre des pieds 5 du fond 4 de récipient (cinq dans l'exemple illustré aux figures 1 à 3) et constitue un fond 1 de moule pétaloïde. Ces cavités sont distribuées angulairement de façon équidistante par rapport à l'axe 12 du fond de moule (écartement angulaire mutuel de 72° dans cet exemple) et sont séparées les unes des autres par des dorsales 13 rayonnantes (c'est-à-dire des parties saillantes, allongées sensiblement radialement, du fond de moule qui conduisent, dans le fond du récipient moulé, à la formation des susdites vallées). Chaque dorsale 13 possède une crête 14 d'étendue concave (par exemple en arc de cercle).

Lorsqu'un récipient est fabriqué par étirage-soufflage d'une préforme chaude dans un moule de soufflage équipé du fond 1 de moule, la préforme 16 commence par être étirée longitudinalement de façon mécanique, sous l'action d'une tige 15 d'étirage introduite dans la préforme 16 et déplaçable axialement ; l'extrémité 17 de la tige 15 d'étirage, en appui contre le fond 18 de la préforme 16, entraîne celui-ci jusqu'au contact du fond 1 de moule, comme représenté en traits mixtes à la figure 2.

Sur la figure 2, on voit clairement que, une fois l'étirage mécanique terminé, la distance D1 séparant le fond d'une cavité 11 de la partie en regard de la préforme 16 est très supérieure à la distance D2 séparant une dorsale 13 de la partie en regard de la préforme 16. Cela signifie que, lors des phases de soufflage pneumatique ou bien de présoufflage pneumatique suivi du soufflage pneumatique qui complètent l'étirage mécanique, la matière thermoplastique du fond 18 de la préforme 16 subit des taux d'étirage longitudinaux et/ou radiaux très différents selon les emplacements ; c'est notamment le cas selon qu'il s'agit de conformer l'extrémité des excroissances formant pieds 5 pour lesquelles le taux d'étirage aussi bien longitudinalement que radialement est maximum ou selon qu'il s'agit de conformer le fond 8 des vallées 7 intercalées entre ces pieds pour lequel le taux d'étirage est moindre.

On rappelle ici que, en général, le moulage par étirage-soufflage comporte, outre l'étape d'étirage mécanique, au minimum une étape de soufflage à l'aide d'un fluide, typiquement de l'air, sous très haute pression (typiquement de l'ordre de 25x10⁵ Pa à 40x10⁵ Pa). Plus souvent, l'étape de soufflage est précédée d'une étape de présoufflage avec un fluide, sous une pression relativement basse (typiquement de l'ordre de 10 à 15x10⁵ Pa). La présence ou pas de l'étape de présoufflage, de même que le séquencement des diverses étapes dépendent des caractéristiques du récipient à fabriquer.

On rappelle aussi que, dans la plupart des cas, l'étape d'étirage est initiée en premier, suivie de l'étape de présoufflage qui, dans de nombreux cas, débute alors que l'étirage n'est pas achevé ; puis débute le soufflage, parfois alors que l'étirage n'est pas achevé. Dans d'autres cas, le présoufflage peut être amorcé avant l'étirage. Dans certaines configurations, le soufflage commence après achèvement de l'étirage. Dans d'autres cas encore, on peut trouver le séquencement suivant : étirage complet, suivi du présoufflage et du soufflage. Dans des cas extrêmes, l'opération de présoufflage n'existe pas, et le soufflage commence avant ou après l'achèvement de l'étirage.

D'autres séquencements sont envisageables. Dans la suite de la description, le terme "soufflage" employé sans autre précision désignera indifféremment, et quel qu'en soit le séquencement par rapport à l'étirage mécanique, une étape de soufflage seule ou la succession d'une étape de présoufflage et d'une étape de soufflage.

Quel que soit le séquencement des opérations, pour obtenir une conformation correcte du fond 4 du récipient dans son ensemble, il est nécessaire que la matière thermoplastique soit à une température lui conférant un ramollissement optimum permettant un étirage homogène, tout en maintenant toutefois la température en dessous de la température de cristallisation. On est alors assuré que la matière ramollie peut alimenter de façon correcte les zones qui subissent les taux d'étirage les plus élevés, et par là que l'on obtient un récipient avec un fond possédant une épaisseur relativement constante dans toutes ses parties malgré sa forme complexe.

Or, la tige 15 d'étirage, qui est métallique, est mise en contact séquentiellement avec les fonds des préformes chaudes successives et voit certes sa température s'élever du fait de ces contacts répétés ; toutefois, ces contacts n'étant qu'intermittents, la tige reste en permanence à une température moyenne sensiblement inférieure à celle des préformes chaudes. Typiquement, pour fixer les idées, les préformes sont chauffées à une température de l'ordre de 100°C, tandis que la température moyenne de la tige d'étirage reste de l'ordre de 85°C.

De ce fait, on comprend que, dans la zone de contact de la tige 15 d'étirage avec la matière thermoplastique du fond 18 des préformes 16, cette matière, en cédant de la chaleur à la tige métallique qui joue le rôle de récepteur thermique, se refroidit localement. Il en résulte qu'au moins localement la matière thermoplastique, devenue moins chaude, perd une partie de sa capacité d'étirage. Il faut aussi souligner que, sous la poussée de l'extrémité 17 de la tige, la matière thermoplastique du fond 18 de la préforme se déforme et dans une certaine mesure se rétreint autour de l'extrémité 17 de la tige, ce qui augmente la surface de contact. L'échange thermique précité en est d'autant accru.

La conséquence est que, en raison de la mobilité insuffisante de la matière thermoplastique lors du soufflage, et quel que soit le moment auquel il débute après que la tige d'étirage ait touché le fond de la préforme, une trop grande quantité de matière demeure dans la zone centrale du fond du récipient en correspondance avec la position du fond de la préforme. Concrètement, le fond des récipients présente une épaisseur fortement variable selon les endroits : l'épaisseur de matière est maximum dans une couronne centrale entourant le plateau 10 ou bouton central, tandis qu'elle est minimale dans le fond des pieds en raison de l'insuffisance d'apport en matière.

Cet inconvénient est peu sensible lors de la fabrication de récipients à fonds standard qui présentent des reliefs relativement peu différenciés et n'affecte pas la qualité de fabrication de tels récipients. Par contre, l'inconvénient évoqué ci-dessus prend toute son importance lors de la fabrication des récipients à fond pétaloïde : la formation correcte des pieds 5 du fond nécessite un fort taux d'étirage de la matière thermoplastique alors que cette matière est précisément celle qui a été au contact de la tige 15 d'étirage et qui a subi un abaissement de température. Cependant, pour les récipients ayant des capacités normales ou petites (c'est-à-dire ayant des capacités n'excédant pas 2 litres environ), cet inconvénient est peu sensible et aucune compensation n'a jusqu'à présent été envisagée pour ce type de récipients. Par contre, pour des récipients de capacité sensiblement supérieure (par exemple récipients de 3 ou 3,5 litres), l'écart dimensionnel entre les pieds et les vallées devient beaucoup plus important et tel qu'il n'est plus possible de réaliser des fonds pétaloïdes de forme correcte dans les conditions actuellement pratiquées pour des récipients de capacité moindre.

Pour tenter de remédier, au moins en partie, à cet inconvénient, il a déjà été envisagé de réduire, autant que faire se peut, la surface de contact de la tige d'étirage avec la matière thermoplastique du fond des préformes chaudes. A cette fin, il a été proposé de mettre en oeuvre des tiges d'étirage épaulées qui présentent une partie terminale de diamètre réduit se raccordant au corps de tige par un épaulement (voire par plusieurs épaulements étagés successifs). Avec cet agencement, la matière thermoplastique n'est en contact avec la tige que sur la pointe arrondie de celle-ci et le long du bord périphérique de l'épaulement, ce qui représente une surface de contact moindre qu'avec une tige d'étirage classique.

Toutefois, cette tige d'étirage épaulée présente l'inconvénient d'être agressive pour les préformes. La matière thermoplastique chaude, qui est fragile et facilement déchirable, peut être aisément percée par l'extrémité de moindre diamètre de la tige du fait que l'effort de poussée communiqué par la tige au fond de la préforme est appliqué sur une surface réduite ; au surplus, le bord périphérique de l'épaulement, s'il entre en contact avec la matière thermoplastique, peut marquer celle-ci, voire provoquer là aussi son déchirement.

L'invention a pour objet de répondre à la demande première de la pratique, à savoir de faire en sorte que la matière thermoplastique chaude puisse s'étirer correctement partout où cela est nécessaire, tout en évitant les inconvénients des tiges d'étirage épaulées et les risques d'endommagement et de déchirure de la matière chaude qui leur sont associés.

A ces fins, selon un premier de ses aspects qui vise un procédé tel que mentionné au préambule, l'invention propose que, lors de la phase d'étirage, on réduise les pertes thermiques dans des zones longitudinales de la partie terminale des préformes, s'étendant sur le fond et sur une portion axiale du corps des préformes adjacentes au fond, qui sont réparties sur la périphérie des extrémités des préformes sensiblement en regard respectivement des cavités du fond pétaloïde de moule.

Ainsi, la matière thermoplastique desdites zones longitudinales est, grâce à la réduction des pertes thermiques, maintenue à une température plus élevée et est donc apte à être étirée de façon plus homogène. Il en résulte que les pieds des fonds des récipients présentent une épaisseur accrue de matière et sont plus résistants mécaniquement, tandis que, la matière thermoplastique étant mieux répartie, les fonds des récipients présentent de moindres variations d'épaisseur en leurs diverses parties. Finalement, avec la même quantité de matière thermoplastique affectée à la réalisation de chaque fond de forme complexe, on obtient des fonds ayant une meilleure résistance.

On prévoit selon l'invention que, pour l'étirage, on met en oeuvre une tige d'étirage qui comporte une partie terminale dont la surface externe présente plusieurs zones en creux en nombre égal à celui des cavités du fond de moule et réparties angulairement identiquement à la répartition angulaire desdites cavités et qu'on bloque en rotation ladite tige d'étirage dans une position angulaire prédéterminée telle que lesdites zones en creux soient situées sensiblement en regard des cavités du fond pétaloïde de moule. Ainsi, la matière thermoplastique chaude d'une préforme située au droit desdites zones en creux n'entre pas en contact avec la tige d'étirage et subit une moindre déperdition thermique ; maintenue ainsi à une température plus élevée, elle peut, lors des étapes d'étirage et de soufflage, s'étirer plus facilement et sur une plus grande amplitude de déplacement précisément là où cela est requis, à savoir dans les zones de formation des pieds. En outre, la mise en oeuvre de ces dispositions n'affecte en rien la structure des pièces composantes du moule et du dispositif de moulage autres que la tige d'étirage.

De façon simple à réaliser et qui n'affecte qu'au minimum la conformation de la tige d'étirage, les susdites zones en creux peuvent être des cannelures d'étendue longitudinale creusées dans la surface externe de la tige d'étirage.

Selon un second de ses aspects qui vise un dispositif de moulage tel que mentionné au préambule en vue de la mise oeuvre de l'aspect préféré du procédé ci-dessus, l'invention propose que la tige d'étirage comporte une partie terminale dont la surface externe présente périphériquement plusieurs zones en creux en nombre égal à celui des cavités du fond de moule et réparties angulairement identiquement à la répartition angulaire desdites cavités et que des moyens de blocage en rotation soient fonctionnellement associés à ladite tige d'étirage pour la maintenir bloquée dans une position angulaire prédéterminée telle que lesdites zones en creux soient situées sensiblement en regard des cavités du fond pétaloïde de moule.

Dans un mode de réalisation préféré, on prévoit que les zones en creux soient des cannelures d'étendue longitudinale creusées dans la surface externe de la tige d'étirage. Avantageusement les cannelures peuvent posséder une profondeur et/ou une largeur variable longitudinalement, ce grâce à quoi les flux de fluide de soufflage engagés dans lesdites cannelures induisent des prédéformations radiales vers l'extérieur des zones préférentielles de la préforme situées en regard desdites cannelures.

Dans le cas le plus courant où la tige d'étirage est de forme générale cylindrique de révolution avec un diamètre nominal déterminé, on peut combiner les dispositions qui précèdent avec celle supplémentaire qui consiste en ce que la partie terminale de la tige d'étirage comprend une portion terminale cylindrique de révolution ayant un diamètre sensiblement moindre que ledit diamètre nominal et une portion intermédiaire de liaison tronconique avec un angle de conicité relativement faible, et en ce que les cannelures s'étendent non seulement sur lesdites portions terminale et intermédiaire de la tige d'étirage, mais aussi sur une portion de diamètre nominal adjacente à la portion intermédiaire tronconique.

L'invention sera mieux comprise à la lecture de la description détaillée qui suit de certains de ses modes de réalisation préférés donnés uniquement à titre d'exemples purement illustratifs. Dans cette description, on se réfère au dessin annexé sur lequel :
- la figure 1 est une vue de dessus d'un fond de moule de type pétaloïde ;
- la figure 2 est une vue en coupe diamétrale selon la ligne II-II du fond de moule de la figure 1 ;
- la figure 3 est une vue en perspective de trois quarts par le dessus, avec arrachement partiel, du fond de moule de la figure 1 ;
- la figure 4 est une vue partielle en perspective isométrique de trois quarts par le dessous d'un récipient muni d'un fond pétaloïde moulé avec un fond de moule agencé selon les figures 1 à 3 ;
- la figure 5 est une vue en coupe d'un fond de moule de type pétaloïde, avec une tige d'étirage et une préforme en fin d'étirage, illustrant schématiquement le procédé conforme à l'invention ;
- la figure 6A est une vue de côté montrant la partie terminale d'une tige d'étirage agencée pour la mise en oeuvre du procédé conforme à l'invention ;
- la figure 6B est une vue, à échelle agrandie, en coupe selon la ligne VIB-VIB de la tige d'étirage de la figure 6A ;
- la figure 7A est une vue de côté montrant une variante préférée de réalisation de la tige d'étirage de la figure 6A ;
- la figure 7B est une vue en bout, à échelle agrandie, de la tige d'étirage de la figure 7A ;
- la figure 8 est une vue en coupe analogue à celle de la figure 5 avec mise en oeuvre de la tige d'étirage des figures 7A et 7B ;
- la figure 9 est une vue en coupe à plus grande échelle des parties terminales d'une préforme et d'une tige d'étirage selon les figures 7A, 7B, montrant un effet particulier procuré par une tige d'étirage agencée selon l'invention.

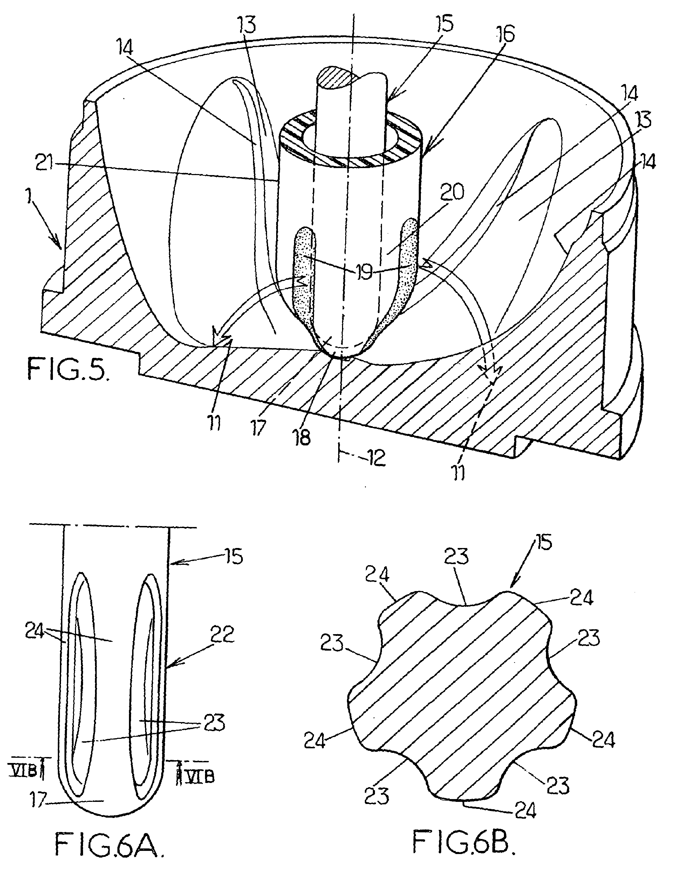

On se réfère maintenant tout d'abord à la figure 5, sur laquelle les organes et parties identiques à ceux des figures 1 à 4 sont désignés par les mêmes références numériques.

Conformément à l'invention, on prévoit que, lors de la phase d'étirage, on réduit les pertes thermiques dans des zones 19 longitudinales de la partie terminale 20 de la préforme 16, s'étendant sur le fond 18 de cette dernière et sur une portion axiale du corps 21 de la préforme adjacente audit fond 18, qui sont réparties sur la périphérie de l'extrémité de la préforme sensiblement en regard respectivement des cavités 11 du fond 1 de moule.

Grâce à cette disposition, la matière thermoplastique desdites zones 19 longitudinales demeure à une température plus élevée que celle qu'elle avait dans la solution habituelle et elle est ainsi apte à être étirée de façon plus homogène et mieux répartie lors du soufflage. En conséquence, l'épaisseur du fond est plus uniforme dans son ensemble : la partie centrale du fond voit son épaisseur diminuée tandis que les pieds du fond des récipients présentent une épaisseur de matière accrue et sont plus résistants mécaniquement.

L'homme du métier peut envisager diverses solutions pratiques pour réduire les pertes thermiques dans les zones 19 précitées, par exemple par des apports calorifiques dans lesdites zones de manière à compenser les transferts thermiques vers la tige d'étirage. Toutefois, il est souhaitable que la solution retenue pour la mise en oeuvre du procédé de l'invention soit aussi simple que possible et n'affecte pas la structure du moule, et notamment celle du fond de moule, qui peut s'avérer déjà complexe pour d'autres raisons (notamment son refroidissement).

C'est dans cette optique que les moyens conduisant à une réduction localisée des pertes thermiques dans l'extrémité de la préforme ont été mis en oeuvre non pas dans le moule, mais sur la tige d'étirage.

Conformément à l'invention, la surface externe de la partie terminale 22 de la tige 15 d'étirage présente, comme visible à la figure 6A, périphériquement plusieurs zones 23 en creux en nombre égal à celui des cavités 11 du fond 1 de moule et réparties angulairement identiquement à la répartition angulaire desdites cavités 11.

Grâce à cette disposition, on évite le contact de la tige 15 d'étirage avec des zones préférentielles du fond 18 de la préforme, de sorte que dans ces zones la température de la matière thermoplastique n'est pas amoindrie par un échange thermique avec la tige. Dans ces zones, la matière thermoplastique conserve donc une malléabilité accrue qui lui permet un étirage plus facile en direction des cavités 11 du fond de moule lors du soufflage.

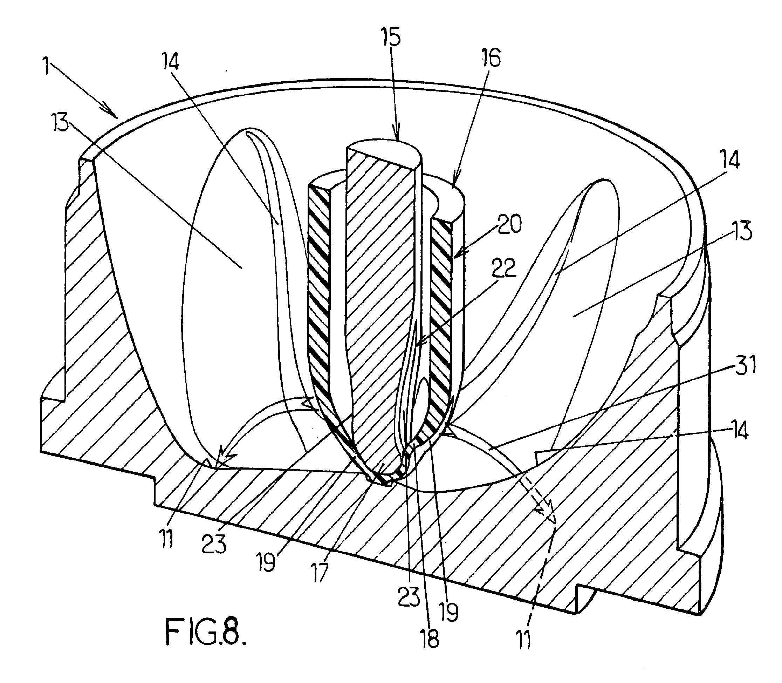

Avantageusement, les zones 23 en creux sont des cannelures d'étendue longitudinale creusées dans la surface externe de la tige 15 d'étirage, et ces cannelures définissent entre elles des portions 24 libres de la surface externe de la tige 15. Dans la suite de la description, la référence "23" sera employée indifféremment pour désigner les zones en creux ou les cannelures. A la figure 6B, la vue en coupe de la tige 15 d'étirage de la figure 6A laisse voir cinq cannelures 23 réparties angulairement de façon régulière, avec un écart de 72°, de manière qu'elles se trouvent positionnées respectivement en regard des cinq cavités 11 du fond 1 de moule de la figure 8.

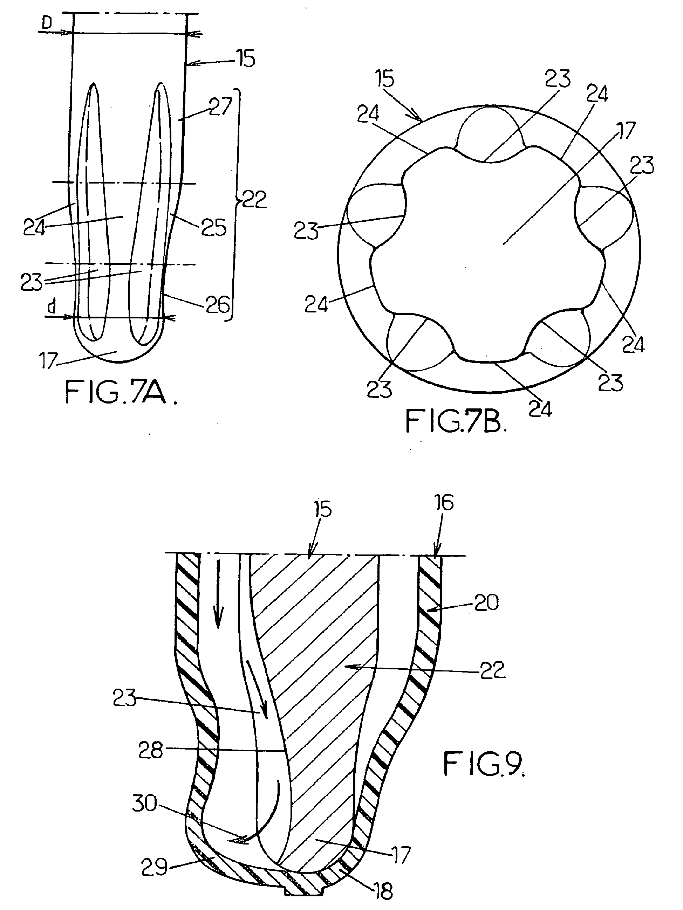

Outre l'avantage thermique procuré comme exposé ci-dessus, les zones en creux, notamment les cannelures 23 peuvent également jouer un rôle au cours de l'étape de soufflage, en particulier lorsque celle-ci est amorcée avant la fin du processus d'étirage mécanique mené à l'aide de la tige d'étirage. En effet, le fluide de soufflage sous pression est guidé par les cannelures 23 jusqu'au fond 18 des préformes 16. Les zones 19 précitées des préformes sont soumises à la pression du fluide de soufflage de façon préférentielle et, étant maintenues dans un état de malléabilité suffisant du fait qu'elles sont moins refroidies, elles subissent une amorce de déformation radiale vers l'extérieur (prédéformations 29 sur la figure 9). Autrement dit, avant même que l'extrémité de la préforme ait commencé dans son ensemble à se déformer sous l'action du fluide de soufflage, les zones 19 précitées commencent à subir une prédéformation 29 localisée en direction des cavités 11 du fond 1 de moule. Cette prédéformation 29 bien que de relativement faible amplitude (elle est fortement amplifiée sur la figure 9 pour raison de clarté) peut cependant contribuer favorablement à un formage plus efficace des pieds.

Pour améliorer l'effet qui vient d'être exposé, on peut profiler efficacement les cannelures 23 comme illustré aux figures 6A, 7A et 8. A cet effet, on peut, comme montré à la figure 9, profiler leur fond 28 de manière que celui-ci, considéré du haut vers le bas de la tige, commence par se creuser, puis s'incurver en direction de la face externe de la tige 15 afin que les jets de fluide sous pression engouffrés dans les cannelures soient projetés (flèche 30) contre la face interne des zones 19 des préformes avec une composante radiale de mouvement (effet toboggan). On peut également envisager une diminution de largeur des cannelures du haut vers le bas de la tige, notamment pour former des restrictions propres à accélérer les jets de fluide sous pression projetés contre les zones 19.

En outre, les cannelures 23 peuvent s'étendre sur une portion longitudinale notable de la partie terminale 22 de la tige 15 d'étirage, excédant sensiblement la hauteur du contact entre la tige et la paroi interne de la préforme, de manière à assurer que le fluide de soufflage puisse s'y engouffrer facilement.

Dans un mode de réalisation préféré qui est celui représenté aux figures 7A et 7B, la tige 15 d'étirage est de forme générale cylindrique de révolution avec un diamètre nominal D déterminé, mais sa partie terminale 22 se présente avec une portion 26 terminale de forme cylindrique de révolution ayant un diamètre d sensiblement moindre que ledit diamètre nominal D, et avec une portion 25 intermédiaire de liaison de forme tronconique ayant un angle de conicité relativement faible. Les cannelures 23 s'étendent non seulement sur lesdites portions 26 terminale et 25 intermédiaire de la tige d'étirage, mais aussi sur une portion 27 de diamètre nominal adjacente à la portion 25 intermédiaire tronconique. En d'autres termes, la partie terminale 22 est constituée des susdites portions 25, 26 et 27.

Grâce à cet agencement, en supplément de l'effet procuré par les cannelures 23, on peut éviter ou réduire le contact de la matière thermoplastique chaude avec la tige d'étirage, d'une manière analogue à ce qui était recherché avec les tiges à épaulement, mais sans le risque d'endommagement de la matière inhérent à la présence de l'épaulement.

Enfin, on prévoit dans le dispositif de moulage que des moyens de blocage en rotation (non montrés) sont fonctionnellement associés à ladite tige 15 d'étirage pour la maintenir bloquée dans une position angulaire prédéterminée par rapport au moule, et notamment par rapport au fond de moule, de manière telle que lesdites zones 23 en creux soient situées sensiblement en regard des cavités 11 du fond 1 de moule.

La figure 8 est une vue analogue à celle de la figure 5 avec mise en oeuvre de la tige 15 d'étirage qui vient d'être décrite en référence aux figures 7A et 7B. Les cannelures 23 de la tige 15 d'étirage, et donc les zones 19 moins refroidies de l'extrémité de la préforme 16, sont disposées en regard des cavités 11 du fond 1 de moule. Les flèches 31 schématisent la direction privilégiée d'étirage de la matière des zones 19 en direction des cavités 11.

## Revendications

1. Procédé de fabrication de récipients (2), notamment de bouteilles, en matière thermoplastique à fond (4) pétaloïde par étirage-soufflage de préformes (16) chaudes dans un moule de soufflage qui possède un fond (1) de moule pétaloïde comportant plusieurs dorsales (13) rayonnantes alternant avec des cavités (11) qui sont propres à former, lors du moulage, respectivement les vallées (7) et les pieds (5) du fond (4) pétaloïde des récipients,
**caractérisé en ce que**, lors de la phase d'étirage, on réduit les pertes thermiques dans des zones (19) longitudinales de la partie terminale (20) des préformes (16), s'étendant sur le fond (18) de ces dernières et sur une portion axiale du corps (21) des préformes (16) adjacente audit fond (18), qui sont réparties sur la périphérie des extrémités des préformes (16) sensiblement en regard respectivement des cavités (11) du fond (1) de moule,
ce grâce à quoi la matière thermoplastique desdites zones longitudinales, qui demeure à une température plus élevée, est apte à être étirée de façon plus homogène, et les pieds du fond des récipients présentent une épaisseur accrue de matière et sont plus résistants mécaniquement,
**en ce que**, pour l'étirage, on met en oeuvre une tige (15) d'étirage qui comporte une partie terminale (22) dont la surface externe présente plusieurs zones (23) en creux en nombre égal à celui des cavités (11) du fond (1) de moule et réparties angulairement identiquement à la répartition angulaire desdites cavités (11) et **en ce qu'**on bloque en rotation ladite tige (15) d'étirage dans une position angulaire prédéterminée telle que lesdites zones (23) en creux soient situées sensiblement en regard des cavités (11) du fond (1) de moule,
ce grâce à quoi la matière thermoplastique chaude située au droit desdites zones en creux n'entre pas en contact avec la tige d'étirage et subit une moindre déperdition thermique.

2. Procédé selon la revendication 1, **caractérisé en ce que** les zones en creux sont des cannelures (23) d'étendue longitudinale creusées dans la surface externe de la partie terminale (22) de la tige (15) d'étirage.

3. Dispositif de moulage pour la fabrication de récipients (2) en matière thermoplastique à fond (4) pétaloïde par étirage-soufflage de préformes (16) chaudes, lequel dispositif comporte au moins un moule de soufflage possédant un fond (1) de moule pétaloïde présentant plusieurs dorsales (13) rayonnantes alternant avec des cavités (11) qui sont propres à former, lors du moulage, respectivement des vallées (7) et des pieds (5) du fond (4) pétaloïde des récipients, audit moule étant associée fonctionnellement une tige (15) d'étirage déplaçable sensiblement selon l'axe (12) du fond (1) du moule, lequel dispositif est destiné à la mise en oeuvre du procédé selon la revendication 1,
**caractérisé en ce que** la tige (15) d'étirage comporte une partie terminale (22) dont la surface externe présente périphériquement plusieurs zones (23) en creux en nombre égal à celui des cavités (11) du fond (1) de moule et réparties angulairement identiquement à la répartition angulaire desdites cavités (11) et **en ce que** des moyens de blocage en rotation sont fonctionnellement associés à ladite tige (15) d'étirage pour la maintenir bloquée dans une position angulaire prédéterminée telle que lesdites zones (23) en creux soient situées sensiblement en regard des cavités (11) du fond (1) de moule pétaloïde.

4. Dispositif de moulage selon la revendication 3, **caractérisé en ce que** les zones en creux sont des cannelures (23) d'étendue longitudinale creusées dans la surface externe de la partie terminale (22) de la tige (15) d'étirage.

5. Dispositif de moulage selon la revendication 4, **caractérisé en ce que** les cannelures (23) possèdent une profondeur et/ou une largeur variable longitudinalement.

6. Dispositif de moulage selon la revendication 4 ou 5 dans lequel la tige (15) d'étirage est de forme générale cylindrique de révolution avec un diamètre (D) nominal déterminé, **caractérisé en ce que** la partie terminale (22) de la tige (15) d'étirage comprend une portion (26) terminale cylindrique de révolution ayant un diamètre (d) sensiblement moindre que ledit diamètre (D) nominal et une portion (25) intermédiaire de liaison tronconique avec un angle de conicité relativement faible, et **en ce que** les cannelures (23) s'étendent non seulement sur lesdites portions (26) terminale et (25) intermédiaire de la tige (15) d'étirage, mais aussi sur une portion (27) de diamètre (D) nominal adjacente à la portion (25) intermédiaire tronconique.

## Claims

1. Method of manufacturing thermoplastic material containers (2), in particular bottles, with a petaloid bottom (4) by drawing-blowing hot preforms (16) in a blowing mold that has a petaloid mold bottom (1) including a plurality of radiating ridges (13) alternating with cavities (11) that are adapted to form, during molding, the valleys (7) and the feet (5), respectively, of the petaloid bottom (4) of the containers,
**characterized in that**, during the drawing phase, heat losses are reduced in longitudinal zones (19) of the end part (20) of the performs (16), extending over the bottom (18) of the latter and over an axial portion of the body (21) of the preforms (16) adjacent to said bottom (18), which are distributed over the periphery of the ends of the preforms (16) sensibly facing respective cavities (11) of the mold bottom (1), whereby the thermoplastic material of said longitudinal zones, which remains at a higher temperature, is adapted to be drawn in a more homogeneous fashion, and the feet of the bottom of the containers feature an increased thickness of material and are mechanically stronger,
**in that**, for the drawing, a drawing rod (15) is used that includes an end part (22), the external surface whereof features a plurality of recessed zones (23) equal in number to the number of cavities (11) of the mold bottom (1) and angularly distributed identically to the angular distribution of said cavities (11), and
**in that** said drawing rod (15) is locked against rotation in a predetermined angular position such that said recessed zones (23) are situated substantially facing the cavities (11) of the mold bottom (1), whereby the hot thermoplastic material situated in said recessed zones does not come into contact with the drawing rod and suffers lower heat loss.

2. Method according to claim 1, **characterized in that** the recessed zones are grooves (23) extending longitudinally and recessed into the external surface of the end part (22) of the drawing rod (15).

3. A molding device for manufacturing thermoplastic material containers (2), with petaloid bottom (4) by drawing-blowing hot performs (16), which device includes at least one blowing mold having a petaloid mold bottom (1) featuring a plurality of radiating ridges (13) alternating with cavities (11) that are adapted to form, during molding, valleys (7) and feet (5), respectively, of the petaloid bottom (4) of the containers, said mold being functionally associated with a drawing rod (15) movable substantially along the axis (12) of the bottom (1) of the mold, said device being adapted to use the method according to claim 1, **characterized in that** the drawing rod (15) includes an end part (22), the external surface whereof features peripherally a plurality of recessed domes (23) equal in number to the number of cavities (11) of the mold bottom (1) and angularly distributed identically to the angular distribution of said cavities (11), and **in that** rotation locking means are functionally associated with said drawing rod (15) to hold it locked in a predetermined angular position such that said recessed areas (23) are situated substantially facing the cavities (11) of the petaloid mold bottom (1).

4. Molding device according to claim 3, **characterized in that** the recessed zones are longitudinally extending grooves (23) recessed in the external surface of the end part (22) of the drawing rod (15).

5. Molding device according to claim 4, **characterized in that** the grooves (23) have a depth and/or a width variable longitudinally.

6. Molding device according to claim 4 or 5 in which the drawing rod (15) is of generally circular-section cylindrical shape with a particular nominal diameter (D), **characterized in that** the end part (22) of the drawing rod (15) comprises a circular-section cylindrical end portion (26) having a diameter (d) significantly less than said nominal diameter (D) and a frustoconical intermediate connecting portion (25) with a relatively low cone angle, and **in that** the grooves (23) extend not only over said end portion (26) and (25) intermediate portion of the drawing rod (15) but also over a portion (27) of nominal diameter (D) adjacent to the frustoconical intermediate portion (25).

## Patentansprüche

1. Verfahren zur Herstellung von Behältern (2), insbesondere von Flaschen, aus einem thermoplastischen Werkstoff, mit einem petaloiden Boden (4) durch Streckblasen von warmen Vorformlingen (16) in einer Blasform, die einen petaloiden Formboden (1) besitzt, der mehrere strahlenförmige Keile (13) aufweist, die sich mit Hohlräumen (11) abwechseln, die dafür geeignet sind, während des Formens die Täler (7) beziehungsweise Füße (5) des petaloiden Bodens (4) von Behältern zu bilden,
**dadurch gekennzeichnet, dass** in der Streckphase die Wärmeverluste in den Längsbereichen (19) des Endabschnitts (20) der Vorformlinge (16) verringert werden, die am Boden (18) der letzteren und an einem axialen Abschnitt des Körpers (21) der Vorformlinge (16) angrenzend an den Boden (18) verlaufen, die über den Umfang der Enden der Vorformlinge (16) jeweils in etwa gegenüber den Hohlräumen (11) des Formbodens (1) verteilt sind,
wodurch der thermoplastische Werkstoff der Längsbereiche, der auf einer höheren Temperatur bleibt, auf homogenere Weise gestreckt werden kann, und die Füße des Behälterbodens eine größere Materialstärke und eine höhere mechanische Festigkeit aufweisen, und
dadurch, dass zum Strecken eine Reckstange (15) eingesetzt wird, die einen Endabschnitt (22) aufweist, dessen Außenfläche mehrere vertiefte Bereiche (23) mit der gleichen Anzahl wie die der Hohlräume (11) des Formbodens (1) aufweist, die hinsichtlich des Winkels identisch mit der Winkelverteilung der Hohlräume (11) verteilt sind, und dadurch, dass die Reckstange (15) beim Drehen in einer festgelegten Winkellage derart festgestellt wird, dass die vertieften Bereiche (23) den Hohlräumen (11) des Formbodens (1) in etwa gegenüberliegen,
wodurch der warme thermoplastische Werkstoff rechts von diesen vertieften Bereichen die Reckstange nicht berührt und einen geringeren Wärmeverlust erfährt.

2. Verfahren nach Anspruch 1, **dadurch gekennzeichnet, dass** die vertieften Bereiche vertiefte Längsrillen (23) in der Außenfläche des Endabschnitts (22) der Reckstange (15) sind.

3. Formvorrichtung zur Herstellung von Behältern (2) aus einem thermoplastischen Werkstoff mit einem petaloiden Boden (4) durch Streckblasen von warmen Vorformlingen (16), wobei die Vorrichtung mindestens eine Blasform aufweist, die einen petaloiden Formboden (1) aufweist, der mehrere strahlenförmige Keile (13) aufweist, die sich mit Hohlräumen (11) abwechseln, die dafür geeignet sind, während des Formens die Täler (7) beziehungsweise Füße (5) des petaloiden Bodens (4) von Behältern zu bilden, wobei mit der Form eine Reckstange (15) funktionell verbunden ist, die im Wesentlichen entlang der Achse (12) des Formbodens (1) bewegt werden kann, wobei die Vorrichtung für die Realisierung des Verfahrens nach Anspruch 1 bestimmt ist, **dadurch gekennzeichnet, dass** die Reckstange (15) einen Endabschnitt (22) aufweist, dessen Außenfläche umlaufend mehrere vertiefte Bereiche (23) mit der gleichen Anzahl wie die der Hohlräume (11) des Formbodens (1) aufweist, die hinsichtlich des Winkels identisch mit der Winkelverteilung der Hohlräume (11) verteilt sind, und dadurch, dass Mittel zum Feststellen während des Drehens funktionell mit der Reckstange (15) verbunden sind, damit sie in einer festgelegten Winkellage derart festgestellt bleibt, dass die vertieften Bereiche (23) den Hohlräumen (11) des petaloiden Formbodens (1) ungefähr gegenüberliegen.

4. Formvorrichtung nach Anspruch 3, **dadurch gekennzeichnet, dass** die vertieften Bereiche vertiefte Längsrillen (23) in der Außenfläche des Endabschnitts (22) der Reckstange (15) sind.

5. Formvorrichtung nach Anspruch 4, **dadurch gekennzeichnet, dass** die Rillen (23) eine in Längsrichtung variable Tiefe und/oder Breite besitzen.

6. Formvorrichtung nach Anspruch 4 oder 5, bei der die Reckstange (15) eine im Allgemeinen rotationszylindrische Form mit einem festgelegten Nenndurchmesser (D) aufweist, **dadurch gekennzeichnet, dass** der Endabschnitt (22) der Reckstange (15) ein rotationszylindrisches Endstück (26) mit einem Durchmesser (d) umfasst, der wesentlich geringer ist als der Nenndurchmesser (D), und ein kegelstumpfförmiges Zwischenverbindungsstück (25) mit einem relativ kleinen Kegelwinkel, und dadurch, dass die Rillen (23) nicht nur auf dem Endstück (26) und dem Zwischenstück (25) der Reckstange (15) verlaufen, sondern auch auf einem an das kegelstumpfförmige Zwischenstück (25) angrenzenden Stück (27) mit dem Nenndurchmesser (D).
